# DEMANDE DE BREVET EUROPEEN

(11) **EP 0 567 398 A1**
(43) Date de publication de la demande: **27.10.1993**
(21) Numéro de dépôt: 93401033.1
(22) Date de dépôt: 21.04.1993
(51) Int. Cl.: F28F 9/02, F28F 1/02, B21D 28/28

(54) **Paroi tubulaire de courbure variable et procédé pour la fabrication d'une boîte à fluide d'échangeur de chaleur**

(30) Priorité: 21.04.1992 FR 9204855
(71) Demandeur: VALEO THERMIQUE MOTEUR, 78320 Le Mesnil Saint-Denis (FR)
(72) Inventeur: Velluet, Pascal, F-78720 Cernay la Ville (FR)
(74) Mandataire: Gamonal, Didier

(57) **Abrégé**

57 Des ouvertures pour le passage de tubes de circulation de fluide, alignées dans la direction longitudinale de la paroi tubulaire (1), sont réalisées au moyen de poinçons (5).

Pour une résistance optimale à l'écrasement lors du poinçonnage, la paroi tubulaire présente un profil ovoïde, allongé dans la direction (2) de translation des poinçons, son rayon de courbure (R2) étant minimal dans la région (DBD') de son périmètre attaqué par les poinçons.

Application à la fabrication de condenseurs pour les installations de climatisation de véhicules automobiles.

## Description

L'invention concerne les boîtes à fluide pour échangeurs de chaleur comprenant une paroi tubulaire présentant des ouvertures alignées le long de son axe pour recevoir des tubes de circulation de fluide.

Dans un procédé connu pour la fabrication d'une telle boîte à fluide, notamment pour un condenseur d'installation de climatisation de véhicule automobile, on réalise les ouvertures au moyen de poinçons qui pénètrent de l'extérieur dans la paroi tubulaire, selon une direction transversale à l'axe de celle-ci. Dans ce procédé connu, la forme générale du profil de la paroi tubulaire est celle d'un cercle. Le diamètre de ce cercle ne doit pas dépasser une valeur limite qui est fonction du matériau et de l'épaisseur de la paroi, faute de quoi celle-ci s'écraserait sous l'effort exercé par les poinçons.

Le but de l'invention est d'augmenter la taille limite au-delà de laquelle le poinçonnage entraînerait un écrasement de la paroi tubulaire.

A cet effet, l'invention vise un procédé de fabrication d'une boîte à fluide pour échangeur de chaleur comprenant une paroi tubulaire présentant des ouvertures alignées le long de son axe pour recevoir des tubes de circulation de fluide, procédé dans lequel on réalise les ouvertures au moyen de poinçons qui pénètrent de l'extérieurdans la paroi tubulaire selon une direction transversale à l'axe de celle-ci, le profil de la paroi tubulaire étant une courbe convexe, caractérisé en ce que ladite paroi tubulaire possède, sensiblement dans la région du périmètre de la paroi tubulaire attaquée par les poinçons, un rayon de courbure plus petit que le rayon de la région restante de la paroi tubulaire.

La résistance à l'écrasement, qui est fonction décroissante du rayon de courbure de la paroi tubulaire dans la région attaquée par les poinçons, est donc meilleure dans le procédé selon l'invention que dans le cas d'une paroi tubulaire à profil circulaire, pour une même surface de section transversale.

Avantageusement, ladite paroi tubulaire possède, sensiblement dans toute la région attaquée, un rayon de courbure au plus égal au rayon de courbure en tout point de ladite région restante. L'effort des poinçons s'exerce alors dans la région de courbure et, par conséquent, de résistance à l'écrasement maximales.

De préférence, les tangentes à la courbe aux points limites de ladite région attaquée font avec la direction d'application des poinçons des angles aigus plus petits que les tangentes à un cercle passant par les points limites et par l'intersection de l'axe médian du poinçon avec la région restante.

L'inclinaison maximale, par rapport à la direction de l'effort, des régions latérales de la paroi tubulaire, raccordant la région attaquée par les poinçons à la région opposée à celle-ci qui reçoit la force de réaction de la matrice, est alors plus faible que dans le cas d'un profil circulaire, de sorte que ces régions latérales travaillent plus en compression et moins en flexion et résistent mieux elles aussi à la déformation.

Selon un mode de réalisation de l'invention, le profil de la paroi tubulaire est bombé sur tout son périmètre.

L'invention a également pour objet une paroi tubulaire utilisable pour la mise en oeuvre du procédé défini ci-dessus, ayant comme profil une courbe convexe qui présente, sur un arc dont la longueur de corde représente au moins la moitié environ de la dimension du profil dans la direction de la corde, un rayon de courbure plus petit que le rayon du reste de la courbe.

D'autres caractéristiques et avantages de l'invention ressortiront de la description détaillée donnée ci-après de quelques exemples de réalisation, et des dessins annexés dans lesquels :
- la figure 1 est une vue en coupe transversale d'une paroi tubulaire selon l'invention, et dans la moitié gauche, d'un outillage de poinçonnage;
- la figure 2 est un schéma expliquant la forme du profil de cette paroi tubulaire ; et
- la figure 3 est une vue en coupe transversale d'une variante de la paroi tubulaire.

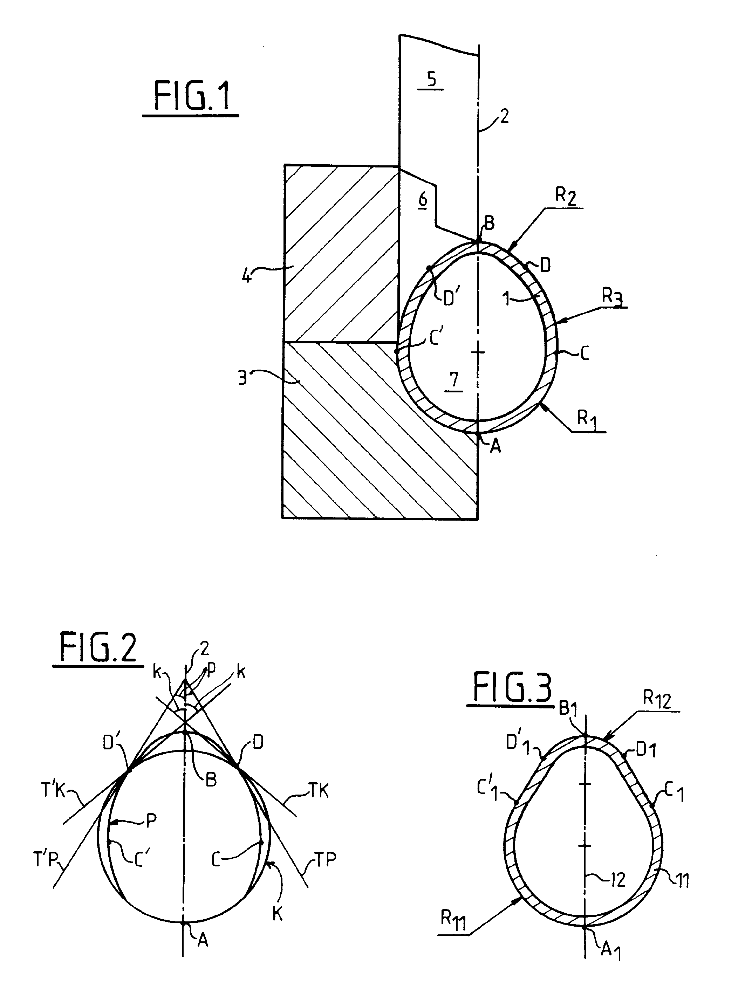

La paroi tubulaire illustrée à la figure 1 présente un profil ovoïde symétrique par rapport à un axe 2 qui le coupe en deux points A et B, la longueur AB constituant la plus grande dimension du profil. Celui-ci est composé d'un arc de cercle CAC', de rayon R1, et dont le centre se trouve sur l'axe 2, d'un arc DBD' inférieur à un demi-cercle, de rayon R2 inférieur à R1 et dont le centre est également sur l'axe 2, et de deux arcs de cercle CD et C'D', de rayon R3 supérieur R1, dont les centres respectifs se trouvent à l'opposé de l'axe 2 par rapport aux arcs eux-mêmes, tous ces arcs étant mutuellement tangents en leurs points de raccordement.

Dans la moitié gauche de la figure 1, est également représenté un outillage de poinçonnage comprenant une matrice composée d'une partie inférieure 3 et d'une partie supérieure 4 et une multiplicité de poinçons 5 alignés dans la direction longitudinale de la paroi tubulaire pour la réalisation d'ouvertures dans celle-ci. Cet outillage est symétrique, comme la paroi tubulaire 1, par rapport à un plan longitudinal contenant l'axe 2. Dans le présent exposé, les indications de positions relatives en hauteur se réfèrent à l'orientation de l'outillage telle que représentée, étant entendu que cet outillage peut fonctionner dans une orientation différente. Les parties de matrice 3 et 4 présentent des évidements respectifs définissant un logement pour la paroi 1, et la partie 4 présente, en outre, des puits verticaux 6 pour recevoir les poinçons 5, ces puits communiquant avec le logement de la paroi 1. Cette dernière est en contact avec la matrice par toute sa surface extérieure, sauf au débouché des puits 6 dans le logement 7, et en particulier en contact avec la partie 3 par toute sa surface inférieure correspondant à l'arc CAC' du profil. La longueur DD' est choisie supérieure ou sensiblement égale à la dimension, dans la direction latérale de la paroi 1, des ouvertures à réaliser dans celle-ci par un mouvement descendant des poinçons 5 parallèlement à l'axe 2. L'effort exercé par les poinçons sur la paroi tubulaire, vers l'intérieur de celle-ci, est donc pratiquement limité à la région de son périmètre correspondant à l'arc DBD', dont le rayon de courbure est minimal et, par conséquent, la résistance à l'écrasement maximale.

On a représenté à la figure 2 le profil ovoïde P de la paroi tubulaire 1, ainsi qu'un cercle K passant par les points A, D et D'. Les tangentes TP et T'P à la courbe P aux points D et D' respectivement font avec l'axe 2 des angles aigus p plus petits que les angles aigus k formés avec le même axe 2 par les tangentes TK et T'K au cercle K aux mêmes points D et D'. Ces angles p représentent l'inclinaison maximale, par rapport à la direction de poinçonnage, des régions CD et C'D' du profil P raccordant la région DBD', qui subit directement l'effort du poinçon, et la région CAC' sur laquelle s'exerce la réaction correspondante de la partie de matrice 3. La tendance de ces régions de raccordement à fléchir vers l'intérieur est donc plus faible que dans le cas d'un profil circulaire, ce qui augmente encore la résistance à la déformation de la paroi tubulaire. Ceci reste vrai si, contrairement à ce qu'on a supposé ci-dessus, la région attaquée par les poinçons ne coïncide pas exactement avec l'arc DBD'.

La paroi tubulaire 11, représentée à la figure 3, présente un profil approximativement ovoïde, différent de celui de la paroi 1 de la figure 1. Ce profil, symétrique par rapport à un axe 12 et légèrement allongé dans la direction de cet axe, qu'il coupe en deux points A₁ et 8₁, est composé d'un arc de cercle C₁A₁C'₁ représentant plus d'un demi-cercle, de rayon R11, d'un arc de cercle complémentaire D₁B₁D'₁, représentant par conséquent moins d'un demi-cercle, de rayon R12 inférieur à R11, les centres de ces arcs de cercle étant sur l'axe 12, et de deux segments de droite C₁0₁ et C'₁0'₁ tangents aux arcs de cercle en leur point de raccordement. Ce profil procure également les avantages décrits ci-dessus en relation avec les figures 1 et 2, pourvu que la région d'attaque des poinçons soit sensiblement limitée à l'arc D₁B₁D'₁.

Le profil de la figure 1 présente l'avantage, par rapport à celui de la figure 3, que, la paroi tubulaire étant bombée sur tout son périmètre, y compris dans les régions de raccordement CD et C'D', l'effort de poinçonnage tend à repousser ces dernières régions vers l'extérieur et à les appliquer contre la partie supérieure 4 de la matrice, ce qui améliore encore la stabilité de forme de la paroi. Bien entendu, d'autres formes de profil que celles décrites sont possibles, le profil devant être dans tous les cas une courbe convexe, c'est-à-dire bombée ou rectiligne sur tout son périmètre, sans points anguleux.

## Revendications

1.- Procédé de fabrication d'une boîte à fluide pour échangeur de chaleur comprenant une paroi tubulaire (1) présentant des ouvertures alignées le long de son axe pour recevoir des tubes de circulation de fluide, procédé dans lequel on réalise les ouvertures au moyen de poinçons (5) qui pénètrent de l'extérieur dans la paroi tubulaire selon une direction (2) transversale à l'axe de celle-ci, le profil de la paroi tubulaire étant une courbe convexe (P), caractérisé en ce que ladite paroi tubulaire possède, sensiblement dans la région (DBD') du périmètre de la paroi tubulaire attaquée par les poinçons, un rayon de courbure (R2) plus petit que le rayon de la région restante de la paroi tubulaire.

2.- Procédé selon la revendication 1, caractérisé en ce que ladite paroi tubulaire possède, sensiblement dans toute la région attaquée (DBD'), un rayon de courbure (R2) au plus égal au rayon de courbure (R1 ,R3) en tout point de la région restante (DAD') dudit périmètre.

3.- Procédé selon l'une des revendications 1 et 2, caractérisé en ce que les tangentes (TPT'P) à la courbe (P) aux points limites (D,D') de ladite région attaquée font avec la direction (2)d'application des poinçons des angles aigus (p) plus petits que les tangentes (TK,T'K) à un cercle passant par les points limites (DD') et par l'intersection de l'axe médian (2) du poinçon avec la région restante (CAC').

4.- Procédé selon l'une des revendications précédentes, caractérisé en ce que la paroi tubulaire est bombée sur tout son périmètre.

5.- Procédé selon l'une des revendications précédentes, caractérisé en ce que ledit profil est ovoïde.

6.- Paroi tubulaire utilisable pour la mise en oeuvre du procédé selon l'une des revendications précédentes, ayant comme profil une courbe convexe (P) qui présente, sur un arc (DBD') dont la longueur de corde (DD') représente au moins la moitié environ de la dimension (CC') du profil dans la direction de la corde, un rayon de courbure (R2) plus petit que le rayon du reste de la courbe(P).
